# EUROPÄISCHE PATENTSCHRIFT

(11) **EP 1 227 008 B1**
(45) Veröffentlichungstag und Bekanntmachung des Hinweises auf die Patenterteilung: **10.08.2005**
(21) Anmeldenummer: 01125964.5
(22) Anmeldetag: 31.10.2001
(51) Int. Cl.: B60R 21/01

(54) **Verfahren zur Auslösung eines Rückhaltesystems**
Method for triggering a restraint system
Procédé pour le déclenchement d'un système de retenue

(30) Priorität: 24.01.2001 DE 10102996
(43) Veröffentlichungstag der Anmeldung: 31.07.2002
(73) Patentinhaber: ROBERT BOSCH GMBH, 70442 Stuttgart (DE)
(72) Erfinder: Oswald, Klaus, 73240 Wendlingen (DE); Grotendiek, Torsten, Dr., 74321 Bietigheim-Bissingen (DE); Roelleke, Michael, 71229 Leonberg-Hoefingen (DE); Mindner, Klaus, 73728 Esslingen (DE); Loeckle, Gerhard, 71634 Ludwigsburg (DE)

(56) Entgegenhaltungen:
- WO-A-00/51850
- DE-A- 19 520 608
- DE-A- 19 807 124
- US-A- 5 737 224
- ANONYMOUS: "Two accelerometer approach to preventing frontal airbag deployment as a result of side impact crashes" RESEARCH DISCLOSURE, KENNETH MASON PUBLICATIONS, HAMPSHIRE, GB, Bd. 431, Nr. 13, März 2000 (2000-03), XP007125674 ISSN: 0374-4353
- MAHMUD S M ET AL: "A NEW DECISION MAKING ALGORITHM FOR AIRBAG CONTROL" IEEE TRANSACTIONS ON VEHICULAR TECHNOLOGY, IEEE INC. NEW YORK, US, Bd. 44, Nr. 3, 1. August 1995 (1995-08-01), Seiten 690-697, XP000526062 ISSN: 0018-9545

## Beschreibung

### Stand der Technik

Die Erfindung geht aus von einem Verfahren zur Auslösung eines Rückhaltesystems nach der Gattung des unabhängigen Patentanspruchs.

Es ist bereits bekannt, daß ein Frontaufprall bei einem Fahrzeug durch Auswertung von auftretenden Beschleunigungssignalen und/oder aufsummierten Beschleunigungssignalen in Fahrrichtung durch einen Vergleich mit vorgegebenen Auslöseschwellen erreicht wird, wobei bei einem Überschreiten der Auslöseschwellen die Auslösung eines Rückhaltesystems zum Schutz der Fahrzeuginsassen veranlaßt wird.

Aus DE 195 20 608 ist es bekannt, bei der Auslösung eines Rückhaltesystems sowohl die Längs- als auch die Querbeschleunigung zur berücksichtigen. Dabei ist eine Verknüpfung von Längs- und Querbeschleunigung zu einer Gesamtbeschleunigung vorgesehen.

Gemäß WO 00/51850A ist darüber hinaus eine Berechnung eines Kriteriums und eines Schwellwerts vorgesehen, wobei das Kriterium mit diesem Schwellwert verglichen wird, und zwar in Abhängigkeit von der Beschleunigung in Längs- und Querrichtung.

### Vorteile der Erfindung

Das erfindungsgemäße Verfahren zur Auslösung eines Rückhaltesystems mit den Merkmalen des unabhängigen Patentanspruchs hat demgegenüber den Vorteil, daß auch Fahrzeugschwingungen quer zur Fahrrichtung, also in y-Richtung, für die Erkennung eines Frontaufpralls ausgewertet werden. Dieses Schwingen ist bei Aufprallsituationen mit geringer Geschwindigkeit ebenso geringer ausgeprägt als bei Aufprallsituationen mit höherer Geschwindigkeit. Das erfindungsgemäße Verfahren nutzt das im zentralen Steuergerät für das Rückhaltesystem ermittelte y-Signal, um bei einem Aufprall unter bestimmten Eingangsbedingungen den Auslösealgorithmus innerhalb eines einstellbaren Zeitfensters so zu verschärfen, daß insbesondere bei Aufprallgeschwindigkeiten von 40 bis 64 km/h die Auslöseperformance verbessert wird. Dabei werden vorteilhafterweise sowohl das y-Beschleunigungssignal als auch ein Integral des y-Beschleunigungssignals ausgewertet, um so jeweils dem x-Beschleunigungssignal als auch dem x-Integrator gegebenenfalls einen in Abhängigkeit von dem y-Beschleunigungssignal beziehungsweise von dem integrierten y-Beschleunigungssignal ermittelten Wert aufzuaddieren. Damit werden höhere bzw. tiefere Auslöseschwellen schneller getroffen, so dass eine frühzeitige Auslösung des Rückhaltesystems erfolgt, was die Sicherheit der Fahrzeuginsassen verbessert. Der jeweilige Zuschlag wird dabei für eine vorgegebene Zeit gemacht, nach der der Zuschlag wieder zurückgenommen wird.

Durch die in den abhängigen Ansprüchen aufgeführten Maßnahmen und Weiterbildungen sind vorteilhafte Verbesserungen des im unabhängigen Patentanspruch angegebenen Verfahrens zur Auslösung eines Rückhaltesystems möglich.

Besonders vorteilhaft ist, daß auch die sogenannten Misuses, das sind harte Fahrmanöver, und Nichtauslöse-Crashes (=NoFire-Crashes) durch die Auswertung der Beschleunigungssignale quer zur Fahrrichtung dazu führen, daß das erfindungsgemäße Verfahren abgeschaltet wird. Bei großen und schweren Fahrzeugen wie z.B. den Geländewagen oder den sogenannten sports utility vehicles (SUV) treten insbesondere bei 40 bis 64 km/h sehr geringe Verzögerungswerte in Fahrrichtung auf, die eine Airbagauslösung mit dem Basisalgorithmus erst ab der fünfzigsten Millisekunde zuverlässig ermöglichen, wenn bei diesen Fahrzeugen eine deformierbare Barriere vorliegt. Erst ab diesem Zeitpunkt ist die Barriere derart deformiert, so daß das Fahrzeug auf einen harten Widerstand trifft und folglich erst dann eine hohe Verzögerung erfährt. Damit ist eine sichere Trennung zu den 15 km/h-Nichtauslöse-Crashes erst ab diesem Zeitpunkt möglich. Dieses Crashverhalten hängt mit dem vergleichsweise hohen Fahrzeuggewicht von über 2 Tonnen und der steifen Struktur zusammen. Es ist jedoch wünschenswert, daß ein beispielsweise 64 km/h-Aufprall bereits unter 40 ms zu einer Auslösung führen soll. Da die Verzögerung in Fahrrichtung nicht für eine frühere Auslöseentscheidung ausreicht ohne die 15 km/h-Crashes mit auszulösen, wird als weiteres Kriterium das zentrale y-Beschleunigungssignal herangezogen. Das y-Beschleunigungssignal besitzt zwar insgesamt eine geringe Dynamik, ist aber bei 40 bis 64 km/h-Aufprallen im Vergleich zum y-Beschleunigungssignal eines 15 km/h-Aufpralls größer. Aus diesem Merkmal lassen sich dann zwei Funktionen ableiten, die Gegenstand des erfindungsgemäßen Verfahrens sind: Die Integratorzuschlagfunktion nutzt den beeinflußbaren Absolutintegrator des zentralen y-Signals aus und macht unter bestimmten Eingangsbedingungen Zuschläge auf den Integrator der x-Beschleunigung. Der Betrag des y-Signals wird bei der sogenannten Threshholdpointer-Zuschlagfunktion dazu verwendet, Zuschläge auf den Thresholdpointer des x-Beschleunigungssignals zu machen. Auch hier sind Eingangsbedingungen definiert, um z.B. im Misuse-Fall die Funktion nicht zu aktivieren.

Weiterhin ist es von Vorteil, daß die Beschleunigungswerte und die entsprechenden integrierten Beschleunigungswerte quer zur Fahrrichtung, also die y-Beschleunigungswerte, mit einem einstellbaren Parameter verglichen werden und wenn die Beschleunigungswerte größer als dieser Parameter sind, dann wird die Differenz aus den beiden Werten gebildet. Bis zum Abschaltzeitpunkt werden die Differenzen dann fortlaufend aufaddiert. Die aufaddierten Werte werden im folgenden als die Dynamik des y-Beschleunigungssignals bezeichnet. In Abhängigkeit von dieser Dynamik des y-Beschleunigungssignals werden Zuschläge auf den x-Integrator gemacht. Die Höhe der Zuschläge ist über eine Kennlinie vorgegeben. Die Zuschläge werden ab dem Zeitpunkt gemacht, ab dem die Dynamik in ein definierbares Zeitschwellenfenster eintritt. Die Zuschläge werden zurückgenommen, wenn der Abschaltzeitpunkt erreicht wurde. Läuft die Dynamik also an dem Fenster vorbei, wird die Funktion abgeschaltet: Erreicht die Dynamik bis zu einem ersten Zeitpunkt höhere Werte als der obere Schwellenwert, dann bleibt die Funktion deaktiviert, denn dann handelt es sich um einen Misuse-Fall, z.B. Hammerschlag oder um einen High-Speed-Frontal-Crash mit hohem y-Anteil. Erreicht die Dynamik bis zu einem zweiten Zeitpunkt geringere Werte als die untere Dynamikschwelle, dann wird die Funktion ebenfalls abgeschaltet, denn dann handelt es sich um einen 15 km/h-Nichtauslöse-Crash.

Vorteilhafterweise werden auch die Beschleunigungswerte zyklisch eingelesen. Der betragsmäßig höchste Wert wird dabei gehalten und in der Höhe begrenzt. Die Begrenzung erfolgt innerhalb von vier Zeitfenstern, innerhalb derer verschiedene Begrenzungswerte appliziert werden. Der begrenzte Wert wird dann ab dem Zeitpunkt auf den x-Beschleunigungswert aufgeschlagen, ab dem der begrenzte Wert in ein applizierbares Zeitschwellenfenster eintritt. Die Zuschläge werden zurückgenommen, wenn der Abschaltzeitpunkt bzw. die Intervallzeit erreicht wurde: Erreicht der Maximalwert bis zu einem dritten Zeitpunkt höhere Werte als der obere Schwellenwert, dann bleibt die Funktion deaktiviert, denn dann handelt es sich um einen Misuse-Fall. Erreicht der Maximalwert bis zu einem vierten Zeitpunkt geringere Werte als die untere Dynamikschwelle, dann wird die Funktion ebenfalls abgeschaltet, denn dann handelt es sich um einen 15 km/h-Nichtauslöse-Crash.

Schließlich ist es auch von Vorteil, daß eine Vorrichtung zum Durchführen des erfindungsgemäßen Verfahrens vorliegt, wobei die Vorrichtung ein Steuergerät aufweist und im Fahrzeug zentral angeordnete Beschleunigungssensoren vorhanden sind, mit der sowohl die Bestimmung der Beschleunigung in und quer zur Fahrrichtung möglich ist. Dabei können die Beschleunigungssensoren entweder direkt in x- und y-Richtung angeordnet sein oder winklig dazu, beispielsweise in einem Winkel von 45 Grad.

### Zeichnung

Ausführungsbeispiele der Erfindung sind in der Zeichnung dargestellt und werden in der nachfolgenden Beschreibung näher erläutert. Figur 1 zeigt ein Blockschaltbild der erfindungsgemäßen Vorrichtung, Figur 2 ein Flußdiagramm des erfindungsgemäßen Verfahrens, Figur 3 zwei Zeitdiagramme, die die Zuordnung des integrierten Beschleunigungswerts in y-Richtung und in x-Richtung illustrieren und Figur 4 zwei Zeitdiagramme, die die zeitliche Abhängigkeit des y-Beschleunigungssignals und des Zuschlags zum x-Beschleunigungssignal zeigen.

### Beschreibung

Im folgenden wird mit x-Beschleunigung eine Beschleunigung in Fahrrichtung und mit y-Beschleunigung eine Beschleunigung quer zur Fahrrichtung bezeichnet. Mit Misuse werden harte Fahrmanöver oder Nichtauslösecrashes bezeichnet, die zu keiner Auslösung von Rückhaltemitteln führen sollen.

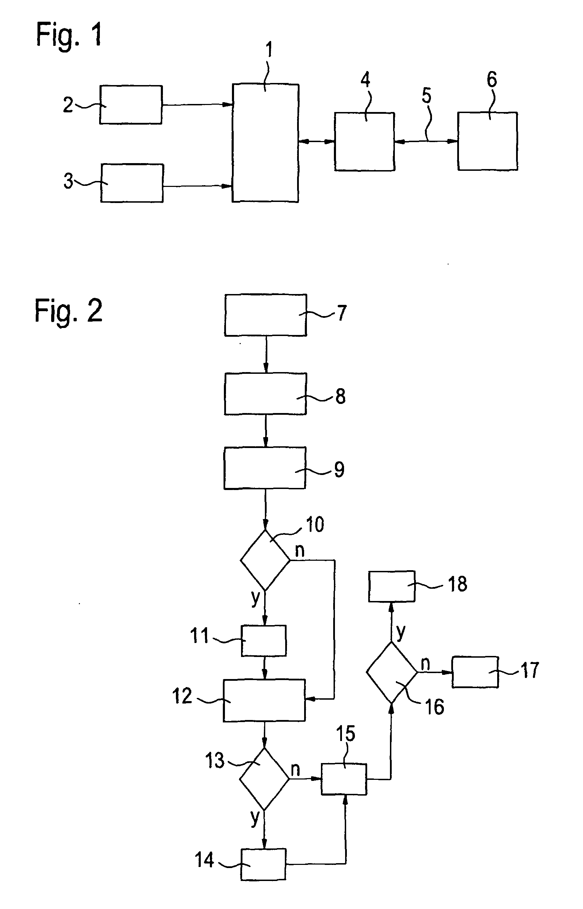

Figur 1 beschreibt als Blockschaltbild die erfindungsgemäße Vorrichtung zur Durchführung des Verfahrens zur Auslösung eines Rückhaltesystems. Ein Prozessor 1 eines Steuergeräts hat an seinen beiden Dateneingängen jeweils Signale von Beschleunigungssensoren 2 und 3, die so angeordnet sind, daß sie die Beschleunigung in Fahrrichtung, also in x-Richtung, und quer zur Fahrrichtung, also in y-Richtung, messen. Über einen Datenein-/ausgang ist der Prozessor 1 mit einem Schnittstellenbaustein 4 verbunden, der das Interface des Steuergeräts bildet. Über einen zweiten Datenein-/ausgang ist der Schnittstellenbaustein 4 über einen Bus 5 mit einem Rückhaltemittel 6 verbunden. Bei den Rückhaltemitteln 6 handelt es sich beispielsweise um Airbags oder Gurtstraffer.

In Figur 2 ist als Flußdiagramm das erfindungsgemäße Verfahren zur Auslösung eines Rückhaltesystems mit den Rückhaltemitteln 6 dargestellt. In Verfahrensschritt 7 werden mit den Beschleunigungssensoren 2 und 3 die Beschleunigungen in x- und y-Richtung, also in Fahrrichtung und quer zur Fahrrichtung, erfaßt. Die Beschleunigungssensoren 2 und 3 verstärken dabei das Meßsignal, filtern es und digitalisieren es. Das digitale Signal wird dann an den Prozessor 1 des Steuergeräts übertragen.

Im Prozessor 1 wird in Verfahrensschritt 8 die Integration der Beschleunigungssignale durchgeführt. In Verfahrensschritt 9 erfolgt dann die Auswertung der Beschleunigung quer zur Fahrzeugrichtung, also der y-Beschleunigung. Wird in Verfahrensschritt 10 erkannt, daß die y-Beschleunigung solche Werte annimmt, so daß ein Zuschlag auf den x-Beschleunigungswert erforderlich ist, wird zu Verfahrensschritt 11 gesprungen, in dem ein Zuschlag des Wertes der y-Beschleunigung zu der x-Beschleunigung erfolgt. Ist kein Zuschlag erforderlich, wird direkt zu Verfahrensschritt 12 gesprungen, der auch auf Verfahrensschritt 11 folgt. In Verfahrensschritt 12 erfolgt die Auswertung der integrierten Beschleunigung in y-Richtung. Auch hier wird in Verfahrensschritt 13 überprüft, ob ein Zuschlag zu dem integrierten x-Beschleunigungssignal erforderlich ist oder nicht. Ist das der Fall, dann wird in Verfahrensschritt 14 ein Zuschlag gemäß einer gegebenen Kennlinie in Abhängigkeit von der integrierten y-Beschleunigung durchgeführt. Auf Verfahrensschritt 14 folgt Verfahrensschritt 15, der auch direkt von Verfahrensschritt 13 aus angesprungen wird, sofern kein Zuschlag erforderlich ist.

In Verfahrensschritt 15 werden nun die Beschleunigungssignale in x-Richtung als auch die integrierten Beschleunigungssignale in x-Richtung mit den Auslöseschwellen verglichen, um in Verfahrensschritt 16 festzustellen, ob eine Auslösung der Rückhaltemittel 6 erforderlich ist. Ist das der Fall, dann werden in Verfahrensschritt 18 die entsprechenden Rückhaltemittel 6 ausgelöst. Dies wird dann über die Schnittstelle 4 und den Bus 5 zu den Rückhaltemitteln 6 übertragen. Wurde in Verfahrensschritt 16 festgestellt, daß kein Auslösefall vorliegt, endet in Verfahrensschritt 17 das Verfahren.

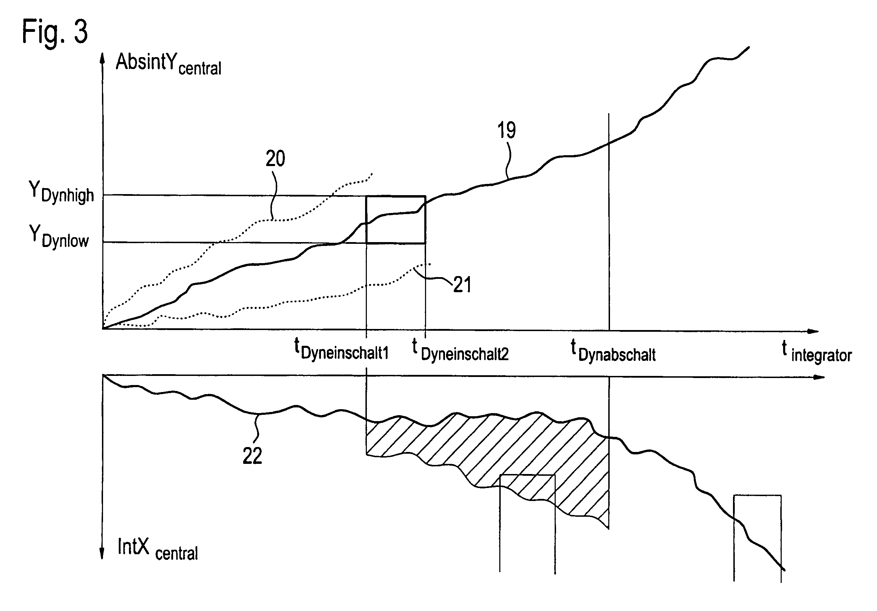

Das Diagramm in Figur 3 erläutert, in welchen Fällen ein Zuschlag auf das integrierte x-Signal erfolgt. Insbesondere werden hier auch die Fälle dargestellt, bei denen kein Zuschlag erfolgt und das erfindungsgemäße Verfahren abgeschaltet wird. Im oberen Geschwindigkeits-Zeit-Diagramm ist das integrierte y-Beschleunigungssignal dargestellt. Die Kurven 19, 20 und 21 stellen drei verschiedene Fälle für das integrierte y-Beschleunigungssignal dar. Die Fälle 20 und 21 sind sogenannte Fälle, bei denen keine Verschärfung des Auslösealgorithmus erfolgt. Mit Verschärfung ist ein Absenken der Auslöseschwelle gemeint. Die Kurve 20 erreicht vor dem Zeitpunkt t_{Dyneinschalt1} den oberen Schwellenwert y_{Dynhigh}, denn solch ein Verhalten läßt auf einen Aufprall mit hoher Geschwindigkeit auf eine starre Barriere oder aber auf einen Misuse-Fall schließen. Auch die Kurve 21 zeigt einen Misuse-Fall. Hier wird bis zum Zeitpunkt t_{Dyneinschalt2} der untere Schwellenwert y_{Dynlow} nicht erreicht. Dies läßt auf einen Aufprall mit geringer Geschwindigkeit, also einen 15 km/h-Aufprall schließen. Die Kurve 19 zeigt nun einen solchen Fall, der einen Aufprall zwischen 40 und 65 km/h anzeigt und der zu einem Zuschlag zu dem integrierten x-Beschleunigungssignal führt. Zum Zeitpunkt t_{Dynabschalt} wird das erfindungsgemäße Verfahren schließlich abgeschaltet.

Überschreitet das x-Beschleunigungssignal die Rauschschwelle, dann wird das erfindungsgemäße Verfahren aktiviert. Die Beschleunigungswerte in y-Richtung werden zyklisch von dem Prozessor 1 eingelesen und mit einem einstellbaren Beschleunigungswert K verglichen. Ist der Betrag des Beschleunigungswerts in y-Richtung größer als der Wert K, dann wird die Differenz aus den beiden Werten gebildet. Bis zum Abschaltzeitpunkt t_{Dynabschalt} werden die Differenzen dann fortlaufend aufaddiert. Die aufaddierten Werte werden im folgenden als Dynamik des y-Signals bezeichnet.

In Abhängigkeit der Dynamik des y-Signals werden Zuschläge auf das integrierte x-Beschleunigungssignal gemacht. Die Höhe der Zuschläge ist über eine applizierbare Kennlinie vorgegeben. Die Zuschläge werden ab dem Zeitpunkt gemacht, ab dem die Dynamik in ein definierbares Zeitfenster eintritt. Die Dynamik muß sich innerhalb der Zeiten t_{Dyneinschalt1} und t_{Dyneinschalt2} und innerhalb der Schwellen y_{Dynlow} und y_{Dynhigh} befinden. Die Zuschläge werden zurückgenommen, wenn der Abschaltzeitpunkt t_{Dynabschalt} erreicht wurde. Läuft die Dynamik also an dem Fenster vorbei, wird die Funktion abgeschaltet. Die Zuschläge werden also gemacht ab dem Zeitpunkt in dem Zeitfenster t_{Dyneinschalt1} und t_{Dyneinschalt2}, wenn bis t_{Dyneinschalt1} die Schwelle y_{Dynhigh} von der Kurve 19 nicht überschritten wurde und bis t_{Dyneinschalt2} die Schwelle y_{Dynlow} von der Kurve 19 überschritten wurde.

Die einstellbaren Parameter sind daher t_{Dyneinschalt1}, t_{Dyneinschalt2}, y_{Dynlow}, y_{Dynhigh}, t_{Dynabschalt}, der Wert K und die Kennlinie für den Integratorzuschlag. Die Kurve 22, die im unteren Diagramm das integrierte x-Beschleunigungssignal zeigt, wird ab dem Zeitpunkt tDyneinschalt1 bis tDynabschalt erhöht und erreicht damit zwischen tDyneinschalt2 und tDynabschalt eine Auslöseschwelle, die hier mit Threshold bezeichnet ist.

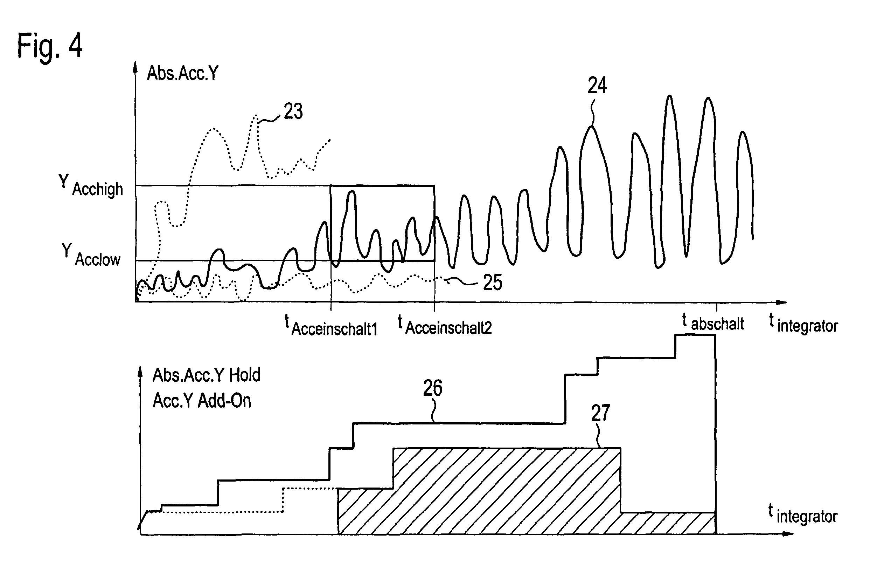

In Figur 4 ist dargestellt, wie in Beschleunigungs-Zeit-Diagrammen das y-Beschleunigungssignal zu einer Erhöhung des x-Beschleunigungssignals führt. Auch hier liefern die Kurven 23, 24 und 25 jeweils drei verschiedene Fälle für die Beschleunigung in y-Richtung, wobei erneut die Fälle 23 und 25 jeweils Fälle darstellen, bei denen die erfindungsgemäße Funktion abgeschaltet wird. Die Kurve 23 stellt einen Aufprall mit hoher Geschwindigkeit beziehungsweise Misuses dar, da der obere Schwellwert y_{Acchigh} vor der Zeit t_{Acceinschalt1} erreicht wird und die Kurve 25 bis zur Zeit t_{Acceinschalt2} den unteren Schwellenwert y_{Acclow} nicht erreicht. Die Kurve 23 beschreibt daher einen Hochgeschwindigkeitsaufprall oder einen starken Misuse und die Kurve 25 einen Aufprall mit 15 km/h Geschwindigkeit. Die Kurve 24 erreicht jedoch das Zeitschwellenfenster und führt so zu einem Zuschlag zur x-Beschleunigung. Erst zum Zeitpunkt t_{abschalt} wird die erfindungsgemäße Funktion abgeschaltet. Im unteren Diagramm ist dargestellt, welcher Betrag zudem x-Beschleunigungssignal addiert wird.

Die Beschleunigungswerte AccY_{central} werden zyklisch eingelesen. Der betragsmäßig höchste Wert AccY_{centralholdmax} wird dabei gehalten und in der Höhe begrenzt. Die Begrenzung erfolgt innerhalb von vier Zeitfenstern, innerhalb derer verschiedene Begrenzungswerte appliziert werden. Der begrenzte Wert AccY_{centralholdbegrenzt} wird dann ab dem Zeitpunkt auf den Thresholdpointer von AccX_{central} aufgeschlagen, ab dem AccY_{centralholdbegrenzt} in ein applizierbares Zeitschwellenfenster eintritt. Das ist hier der Zeitpunkt t_{Acceinschalt1}. Die Fläche ist schraffiert, ab der das x-Beschleunigungssignal um die Kurve 27 erhöht wird. Die Kurve 26 stellt die gehaltenen Werte des y-Beschleunigungssignals dar. Die Zuschläge werden zurückgenommen, wenn der Abschaltzeitpunkt bzw. die Intervallzeit erreicht wurde: Erreicht der Maximalwert AccY_{centralholdmax} bis t_{Acceinschalt1} höhere Werte als der obere Schwellwert, dann bleibt die Funktion deaktiviert, denn dann handelt es sich um einen Misuse-Fall, z.B. einen Hammerschlag oder um einen High-Speed-Frontal-Crash mit hohem y-Anteil. Erreicht der Maximalwert AccY_{centralholdmax} bis zum Zeitpunkt t_{Acceinschalt2} geringere Werte als die untere Dynamikschwelle Acc_{low}, dann wird die Funktion ebenfalls abgeschaltet, denn dann handelt es sich um einen 15 km/h-Nichtauslöse-Crash. Die Zuschläge werden gemacht ab dem Zeitpunkt tAcceinschalt1, wenn bis tAcceinschalt1 die Schwelle Y_{Acchigh} von Acc_{centralholdmax} nicht überschritten wurde und bis tAcceinschalt2 die Schwelle Acc_{low} von AccY_{centralholdmax} überschritten wurde.

## Patentansprüche

1. Verfahren zur Auslösung eines Rückhaltesystems (6), wobei ein Beschleunigungssignal und/oder ein aufsummiertes Beschleunigungssignal in Fahrrichtung mit vorgegebenen Auslöseschwellen zur Auslösung des Rückhaltesystems (6) verglichen werden, **dadurch gekennzeichnet, dass** das Beschleunigungssignal und/oder das aufsummierte Beschleunigungssignal in Fahrrichtung jeweils in Abhängigkeit von einer Beschleunigung und/oder von einer aufsummierten Beschleunigung quer zur Fahrrichtung vor dem Vergleich mit den vorgegebenen Auslöseschwellen für eine vorgegebene Zeit erhöht werden.

2. Verfahren nach Anspruch 1, **dadurch gekennzeichnet, dass** das Verfahren beginnt, wenn eine vorgegebene Rauschschwelle durch das Beschleunigungssignal in Fahrrichtung überschritten wird.

3. Verfahren nach Anspruch 1 oder 2, **dadurch gekennzeichnet, dass** die Beschleunigung bzw. die aufsummierte Beschleunigung quer zur Fahrrichtung mit einem jeweiligen Parameter verglichen wird, dass, wenn die Beschleunigung bzw. die aufsummierte Beschleunigung quer zur Fahrrichtung größer als der jeweilige Parameter ist, die Differenzen zwischen der Beschleunigung bzw. der aufsummierten Beschleunigung quer zur Fahrrichtung und dem jeweiligen Parameter zeitkontinuierlich in einem jeweiligen vorgegebenen Zeitfenster zu einem Dynamikwert aufaddiert werden, so dass in Abhängigkeit von dem Dynamikwert das Beschleunigungssignal bzw. das aufsummierte Beschleunigungssignal in Fahrrichtung erhöht wird.

4. Verfahren nach Anspruch 3, **dadurch gekennzeichnet, dass** das Beschleunigungssignal bzw. das aufsummierte Beschleunigungssignal in Fahrrichtung erhöht wird, wenn der Dynamikwert im jeweiligen vorgegebenen Zeitfenster zwischen einer jeweiligen oberen und unteren Schwelle liegt.

5. Verfahren nach Anspruch 3 oder 4, **dadurch gekennzeichnet, dass** die Erhöhung des Beschleunigungssignals bzw. des aufsummierten Beschleunigungssignals in Fahrrichtung nach dem jeweiligen vorgegebenen Zeitfenster zurückgenommen wird.

6. Verfahren nach einem der vorhergehenden Ansprüche, **dadurch gekennzeichnet, dass** eine Erhöhung des aufsummierten Beschleunigungssignals in Fahrrichtung unterbleibt, wenn vor einer ersten Zeit die aufsummierte Beschleunigung quer zur Fahrrichtung den oberen Schwellwert erreicht oder wenn die aufsummierte Beschleunigung quer zur Fahrrichtung bis zu einer zweiten Zeit unter dem unteren Schwellwert bleibt oder wenn eine dritte Zeit erreicht wird.

7. Verfahren nach einem der vorhergehenden Ansprüche, **dadurch gekennzeichnet, dass** eine Erhöhung des Beschleunigungssignals in Fahrrichtung unterbleibt, wenn die Beschleunigung quer zur Fahrrichtung vor einer vierten Zeit den oberen Schwellwert erreicht oder wenn die Beschleunigung quer zur Fahrrichtung bis zu einer fünften Zeit unter dem unteren Schwellwert bleibt oder wenn eine sechste Zeit erreicht wird.

## Claims

1. Method for triggering a restraint system (6), wherein an acceleration signal and/or a summed acceleration signal are compared in the direction of travel with predefined triggering thresholds for the triggering of the restraint system (6), **characterized in that** the acceleration signal and/or the summed acceleration signal are increased in the direction of travel, in each case as a function of an acceleration and/or a summed acceleration, transversely with respect to the direction of travel before the comparison with the predefined triggering thresholds for a predefined time.

2. Method according to Claim 1, **characterized in that** the method starts when a predefined noise threshold is exceeded by the acceleration signal in the direction of travel.

3. Method according to Claim 1 or 2, **characterized in that** the acceleration or the summed acceleration in the transverse direction with respect to the direction of travel is compared with a respective parameter, **in that** when the acceleration or the summed acceleration in the transverse direction with respect to the direction of travel is greater than the respective parameter the differences between the acceleration or the summed acceleration in the transverse direction with respect to the direction of travel and the respective parameter are added in a continuous fashion in a respective predefined time window to form a dynamic value so that the acceleration signal or the summed acceleration signal is increased in the direction of travel as a function of the dynamic value.

4. Method according to Claim 3, **characterized in that** the acceleration signal or the summed acceleration signal is increased in the direction of travel if the dynamic value in the respective predefined time window lies between a respective upper threshold and a respective lower threshold.

5. Method according to Claim 3 or 4, **characterized in that** the increase in the acceleration signal or the summed acceleration signal in the direction of travel is cancelled out after the respective predefined time window.

6. Method according to one of the preceding claims, **characterized in that** an increase in the summed acceleration signal in the direction of travel does not occur if the summed acceleration in the transverse direction with respect to the direction of travel reaches the upper threshold value before a first time or if the summed acceleration in the transverse direction with respect to the direction of travel remains below the lower threshold value up to a second time or if a third time is reached.

7. Method according to one of the preceding claims, **characterized in that** an increase in the acceleration signal in the direction of travel does not occur if the acceleration in the transverse direction with respect to the direction of travel reaches the upper threshold value before a fourth time or if the acceleration in the transverse direction with respect to the direction of travel remains below the lower threshold value up to a fifth time or if a sixth time is reached.

## Revendications

1. Procédé pour le déclenchement d'un système de retenue (6), selon lequel un signal d'accélération et/ou un signal d'accélération intégré dans le sens du déplacement sont comparés à des seuils prédéfinis de déclenchement du système de retenue (6),
**caractérisé en ce que**
le signal d'accélération et/ou le signal d'accélération intégré dans le sens du déplacement sont augmentés, pour un temps prédéfini, d'une accélération et/ou d'une accélération intégrée perpendiculaire à la direction de déplacement, avant la comparaison avec les seuils de déclenchement prédéfinis.

2. Procédé selon la revendication 1,
**caractérisé en ce que**
le procédé commence quand le signal d'accélération dans le sens de déplacement dépasse un seuil prédéfini de bruit.

3. Procédé selon la revendication 1 ou 2,
**caractérisé en ce que**
l'accélération ou l'accélération intégrée, perpendiculaire à la direction de déplacement, est comparée à un paramètre, et si ce paramètre est dépassé, les différences entre l'accélération ou l'accélération intégrée, perpendiculaire à la direction de déplacement et le paramètre considéré, sont additionnées en continu à une valeur de dynamique, à l'intérieur d'une fenêtre de temps prédéfini, de façon à augmenter le signal d'accélération et/ou le signal intégré d'accélération dans la direction de déplacement, en fonction de cette valeur de dynamique.

4. Procédé selon la revendication 3,
**caractérisé en ce que**
le signal d'accélération et/ou le signal d'accélération intégré dans la direction de déplacement, est augmenté si la valeur de dynamique, à l'intérieur de la fenêtre de temps prédéfinie, se trouve comprise entre un seuil supérieur et un seuil inférieur.

5. Procédé selon la revendication 3 ou 4,
**caractérisé en ce que**
le signal d'accélération et/ou le signal d'accélération intégré dans la direction de déplacement, est effacé après la fenêtre de temps prédéfinie.

6. Procédé selon une des revendications précédentes,
**caractérisé en ce qu'**
on empêche une augmentation du signal d'accélération intégré dans la direction de déplacement, si avant un premier instant l'accélération sommée, perpendiculaire à la direction de déplacement, a atteint la valeur supérieure de seuil, ou si l'accélération sommée, perpendiculaire à la direction de déplacement, reste jusqu'à un second instant en dessous de la valeur inférieure de seuil, ou si un troisième instant est atteint.

7. Procédé selon une des revendications précédentes,
**caractérisé en ce qu'**
on empêche une augmentation du signal d'accélération dans la direction de déplacement, si l'accélération perpendiculaire à la direction de déplacement atteint avant un quatrième instant la valeur supérieure de seuil, ou si l'accélération perpendiculaire à la direction de déplacement demeure jusqu'à un cinquième instant en dessous de la valeur inférieure de seuil, ou si un sixième instant est atteint.
